# EUROPEAN PATENT APPLICATION

(11) **EP 1 646 249 A1**
(43) Date of publication of application: **12.04.2006**
(21) Application number: 04368066.9
(22) Date of filing: 08.10.2004
(51) Int. Cl.: H04N 13/02

(54) **Single chip stereo image pick-up system with dual array design**

(71) Applicant: Dialog Semiconductor GmbH, 73230 Kirchheim/Teck-Nabern (DE)
(72) Inventor: Dosluoglu, Taner, New York, NY 10011 (US); Friedel, Juergen, 71665 Valhingen/Enz. (DE)
(74) Representative: Schuffenecker, Thierry

(57) **Abstract**

A stereo imaging chip is presented that contains two imaging arrays located at opposite edges of the chip. Support circuitry, including a computational unit, is located on the chip in areas not occupied by the imaging arrays. A FPGA located on the chip is used to provide instructions to the computational unit and allow updates. A stereo focusing unit on a single optical substrate focuses a distant object onto the two imaging arrays. The semiconductor process producing the chip provides accurate alignment of the two imaging arrays and the use of a single optical substrate to containing the stereo lens provides additional dimensional accuracy and stability to allow calculations of the distance to distant objects.

## Description

### Technical field

The present invention relates to semiconductor imaging chips and in particular to a single CMOS chip with two imaging arrays to form a stereo imaging device.

### Background art

There are several configurations that have been developed to capture stereo images using two physical cameras, or a single camera with a prism system to deliver a stereo image to the single camera. Systems containing both video cameras and still cameras have been developed, but each camera only contains a single imaging device. Besides the requirement to create three-dimensional (3-D) images, an additional use of stereo imaging systems is to measure distance to objects remote from the system. These imaging systems usually require a critical alignment of elements of the system and stability over a range of temperature is hard to control.

In US 6,611,664 B2 (Kochi et al.) a system is directed to a stereo image photographing system capable of obtaining a stereo image with use of a general camera to perform a 3-D measurement. US 6,198,485 B1 (Mack et al.) is directed to a method and apparatus for providing 3-D input data to a computer using dual camera properly positioned. US 6,411,327 B1 (In So Kweon et al.) is directed to a stereo camera system for obtaining a stereo image of an object to measure distance between the stereo camera system and the object using a prism and a single camera. US 6,028,672 (Zheng Jason Geng) is directed to a high speed, low cost, multimode 3-D surface profile measurement system. US 5,835,133 (Henry P. Moreton et al.) is directed to a method of recording stereo video with a standard camera system and a uniquely adapted optical assembly.

In these 3-D imaging systems the light sensitive devices that capture the images are discrete devices located a considerable distance apart, which require critical alignment between parts of the system. Some of the imaging systems have complex optics requiring a critical alignment of the optics and the cameras that capture the images. In all cases the positioning of individual parts of the system have distances with tolerances that are difficult to control, and especially with respect to temperature variations of the system.

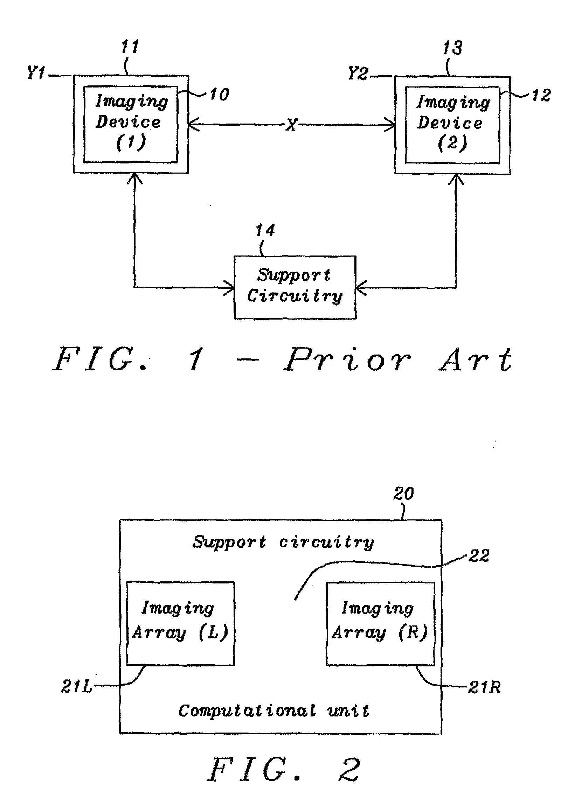

The existing state of the art of stereo cameras consists of two imagers assembled together by a mechanical means. Accuracy of the use of the stereo images is dependent upon the alignment of the imaging devices and the associated optics. For example, the alignment of the imagers in the present state of the art determines the accuracy of the information that is produced, which is used to calculate distances of an object from the stereo camera. FIG. 1A shows two separated imaging devices 10 and 12 located on modules 11 and 13 and separated by at a distance X, which is large with respect to the size of each imaging device. The two imaging devices require a critical alignment of the distance X between them and the vertical location Y1 and Y2 of each. Also the two imaging devices must be maintained such that one is not skewed (rotated) with respect to the other, and temperature stability is required such as to provide a stereo image over a range of temperatures. Support circuitry 14, which may include a computational unit, is external to the two imaging devices 11 and 13, and provides the necessary control and circuitry to capture images from the two imaging devices.

### Summary of the invention

It is an objective of the present invention to provide a stereo imaging system containing a single semiconductor chip that contains two light sensitive arrays, wherein columns and rows of light sensitive elements called pixels form the light sensitive arrays.

It is also an objective of the present invention to place support circuitry and a computational unit on a single semiconductor chip with the two light sensitive arrays.

It is further an objective of the present invention to form a stereo focusing unit containing two lenses to focus a remote object on each of the two light sensitive arrays contained on a single semiconductor chip.

It is still further an objective of the present invention to form the stereo focusing unit from a single optical substrate containing the two lenses.

It is also further an objective of the present invention to measure the distance to object remote from the stereo imaging system.

It is also still further an objective of the present invention to place two light sensitive arrays within a single reticule of a semiconductor process to produce circuit elements without the need to stitch together different portions of the circuitry that forms the chip.

In the present invention two imaging arrays, each containing rows and columns of pixels are formed on a single CMOS chip. The two imaging arrays are located at opposite edges of the chip, and support circuitry including a computational unit is formed in the areas of the chip not occupied by the two imaging arrays. The two imaging arrays are placed within the maximum space allowed by a single reticule of a typical CMOS foundry process, which is approximately 20mm or greater, which eliminates the need to stitch connections to circuitry between the image areas. The two imaging arrays take advantage of the state of the art in CMOS processing alignment tolerances, which are less than 0.01 mm, for volume production.

An optical unit comprising two lenses, a left lens and a right lens, is used to focus distant objects onto the two imaging arrays, a left imaging array and a right imaging array. A single optical substrate containing the two lenses is positioned between the imaging chip and distant objects to focus the distant objects onto the imaging arrays. The left lens focuses a first image of the distant objects onto the left imaging array, and the right lens focuses a second image of the distant objects onto the right imaging array. The material of the optical substrate is chosen to have a temperature coefficient as close to that of the semiconductor substrate as possible to minimize alignment tolerances over a temperature range and maximize the accuracy of the computational comparison of the two images in, for example, a computation of the distance from the stereo imaging system and distant objects.

The support circuits between the image array on the CMOS chip comprise a clock for controlling the timing of the circuitry on the chip, regulators for controlling power to the support circuits and the imaging arrays, analog signal chains for connecting the pixels of each imaging array to analog to digital converters (ADC) that in turn couple digital image data to a computational unit, and a field programmable gate array (FPGA) to allow the programming and modification of the instructions needed to operate the computational unit. The computational unit can be either a digital signal processor (DSP) or a computational unit formed from synthesized logic.

### Description of the drawings

This invention will be described with reference to the accompanying drawings, wherein:
FIG. 1 is a diagram of a stereo imaging unit of prior art,
FIG. 2 is a floor plan of the digital imaging chip of the present invention,
FIG. 3 is a diagram of the stereo imaging of the present invention,
FIG. 4 is a block diagram of the circuitry on the stereo imaging chip of the present invention, and
FIG. 5 is a flow diagram of the method to capture images of a distant object and perform calculations on the captured images.

### Description of the preferred embodiment

In FIG. 2 is shown a plan view of a semiconductor device 20, which contains two imaging arrays, a left imaging array 21 L and a right imaging array 21 R. The two imaging arrays are located at opposite edges the semiconductor device 20 with the left imaging array 21 L located near the left edge of the device and the right imaging array 21 R located near the right edge of the device. Support circuitry and a computational unit occupy the area 22, which is not occupied by the two imaging arrays 21 L and 21 R. The support circuitry comprises, a clock, regulators, analog signal chains, analog to digital converters and a FPGA. The computational unit is either a DSP or a computational unit created from synthesized logic.

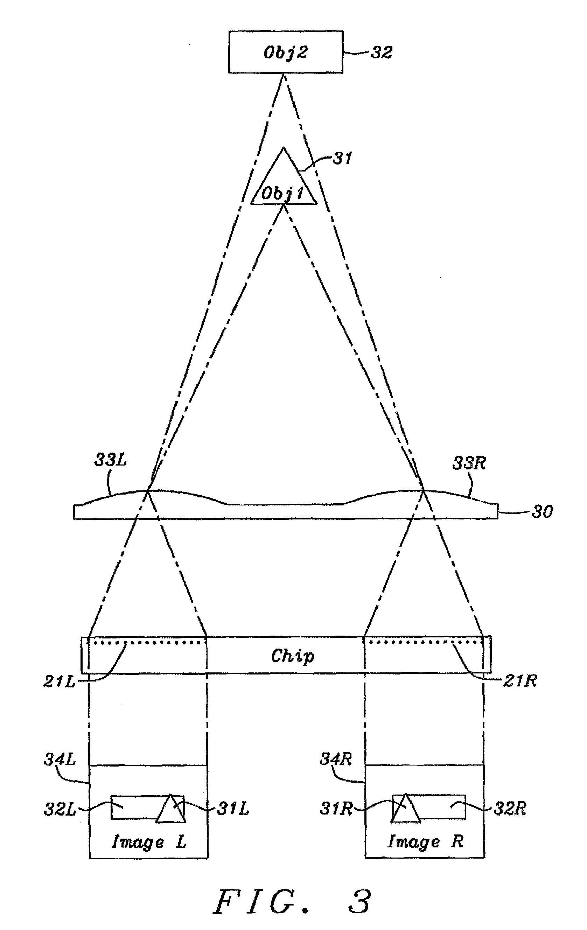

In FIG. 3 is a diagram of the present invention showing the stereo imaging chip 20, a focusing unit 30 and two distant objects Obj1 31 and Obj2 32. On the semiconductor imaging device 20 are located a left imaging array 21 L and a right imaging array 21 R. The focusing unit 30 is positioned a distance from the semiconductor imaging device 20 and in parallel with the surface of the semiconductor imaging device. An image of the distant objects 31 and 32 are focused onto the imaging arrays 21 L and 21 R by the focusing unit 30, whereby an image of the distant objects is focused onto the left imaging array 21 L by a left lens 33L and an image of the distant objects is focused simultaneously onto the right imaging array 21 R by the right lens 33R.

Continuing to refer to FIG. 3, below the stereo imaging chip 20 is shown an example of the image 34L focused onto the left imaging array 21 L and the image 34R focused onto the right imaging array 21 R. The example of the two images 34L and 34R are drawn such as to emphasize the difference in the two images. In Image L, 34L, is shown a left viewing image of the distant objects 31 L and 32L, and in Image R, 34R, is shown a right viewing image of the distant objects 31 R and 32R. In the left viewing image 34L the position of the image 31 L of the distant object Obj1 31 is shifted to the right relative to the position of the image 32L of the distant object Obj2 32. In the right image 34R the position of the image 31 R of the distant object Obj1 31 is shifted left relative to the position of the image 32R of the distant object Obj2 32. This difference in the two images 34L and 34R allows the computational unit contained within the imaging device 20 to calculate the distance to the distant objects 31 and 32. The closer the distant objects are to the stereo imaging system containing the lens unit 30 and the imaging device 20, the greater the shift that is observed in both images 34L and 34R. The further the distant objects are from the stereo imaging system, the smaller the shift that is observed.

The lens unit 30 is preferably a single optical substrate containing both the left lens 33L and the right lens 33R. It is also preferable that the material with which the lens unit 30 is made has a temperature coefficient that as close as possible to the temperature coefficient of the semiconductor device upon which the imaging arrays 21L and 21R are contained to minimize the amount of error resulting from differences in expansion or contraction due to temperature. Creating both lens on the same optical substrate and both imaging array on the same semiconductor device provide an stereo imaging system with a relatively high degree of stability and accuracy.

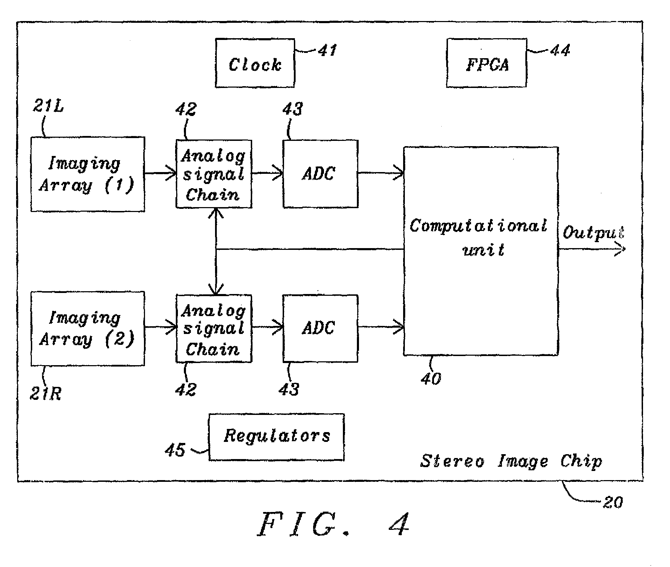

FIG. 4 shows a block diagram of the functions shown on the stereo imaging chip 20. The left imaging array 21 L is coupled to an analog signal chain 42 that is used to scan the pixels of the left imaging array 21 L and couple the pixel data to an analog to digital converter (ADC) 43. The resulting digital representation of the pixel data of the left imaging array 21 L is outputted by the ADC 43 and is coupled to a computational unit 40. The right imaging array 21 R is coupled to an analog signal chain 42 that is used to scan the pixels of the right imaging array 21 R and couple the pixel data to an analog to digital converter (ADC) 43. The resulting digital representation of the pixel data of the right imaging array 21 R is outputted by the ADC 43 and is coupled to a computational unit 40. The computational unit then performs calculations on the digital image data of the right and left imaging arrays to determine a distance from the stereo imaging system to remote objects or distances between remote objects.

Continuing to refer to FIG. 4, the support circuits contained within the stereo imaging chip 20 also comprise a clock 41 to control the timing of the operations of the circuitry on the imaging chip, and regulators 45 to provide power to the circuitry. A field programmable gate array (FPGA) 44 is used to provide instructions to the computational unit 40, which allows adjustment in the instructions, or new instruction to be added without the need to re-fabricate the stereo imaging chip. The computational unit 40 is either a DSP or a computational unit constructed of synthesized logic. The output of the computational unit 40 comprises results of the analysis performed on the pixel data from the imaging arrays 21L and 21 R such as the distance to distant objects, a positional relationship between distant objects, a stereo still image and a stereo video image. The analysis performed by the computational unit compares pixels from each of the imaging arrays 21 L and 21 R and through calculations determines the distant positional relationship of objects captured by the imaging arrays.

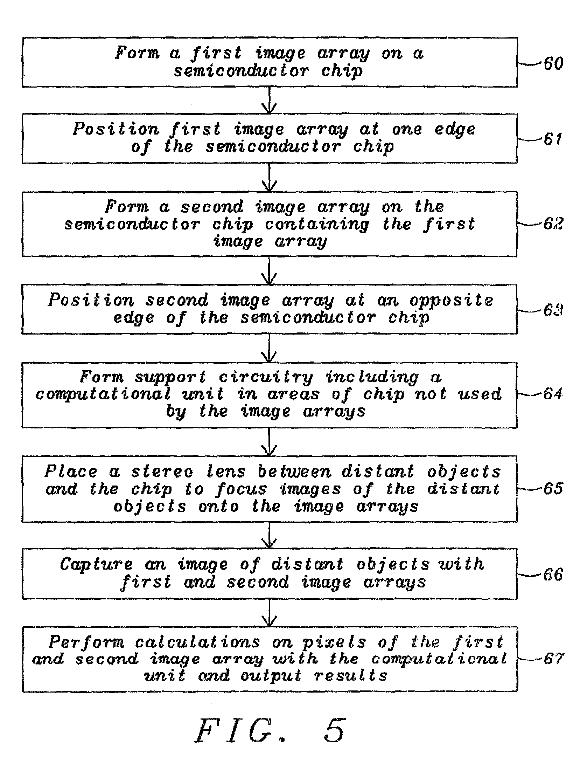

In FIG. 5 is shown a method for calculating parameters such as distance to distant objects. A first image array, comprising rows and columns of pixels, is formed on a semiconductor chip 60. The first image array is positioned at one edge of the semiconductor chip 61. A second image array, comprising rows and columns of pixels, is formed on the semiconductor chip 62. The second image array is positioned at an edge of the semiconductor chip opposite that of the first image array 63. The two image arrays are so formed that both fit within the same reticule used to create the circuitry of the semiconductor chip. This allows the chip to be created without the need to stitch circuits together as would be needed if the spacing of elements of the circuitry extend beyond the limits of a single reticule of the semiconductor process. Using the same reticule insures that the two image arrays are positioned with respect to each other with the best positional tolerances afforded by the semiconductor process.

Continuing to refer to FIG. 5, support circuitry including a computational unit is formed in areas of the stereo image chip not occupied by the two imaging arrays 64. The support circuits comprise a clock, regulators, an FPGA, analog signal chains, analog to digital converters. The computational unit is either a DSP or is constructed from synthesized logic and the FPGA contains instructions to operate the DSP. A stereo lens unit is placed between the distant objects and the stereo image chip to focus distant objects onto the two imaging arrays contained on the stereo image chip 65. The stereo lens unit is preferably a single optical substrate containing two lenses. Each of the two lenses focus an image onto the two imaging arrays, a first lens onto a first imaging array and a second lens onto a second imaging array. Forming the two lenses from a single optical substrate provides additional tolerance control, and if the temperature coefficient of the material forming the optical substrate is close to that of the stereo imaging chip, additional tolerance control can be realized.

Continuing to refer to FIG. 5, images of distant objects are captured in each of the imaging arrays 66. The images are coupled to a computational unit pixel by pixel where the computational unit calculates parameters such as distance to a distant object and distance between distant objects and then outputs the calculated results. The computational unit can also control the support circuitry to output a still stereo image or a video stereo image.

## Claims

1. A stereo imaging system, comprising:
a) a semiconductor chip,
b) a first imaging array,
c) a second imaging array,
d) said first and second imaging arrays located at opposite edges of said chip with support circuits and a computational unit located in areas on said chip not used by the imaging arrays to form a stereo imaging chip.

2. The system of claim1, wherein said first and second imaging arrays comprise rows and columns of light sensitive elements called pixels.

3. The system of claim 1, wherein said first and second image arrays are positioned as far apart as permitted by said chip.

4. The system of claim 1, wherein said first and second image arrays located on said chip provide a relative alignment determined by a semiconductor process creating said chip.

5. The system of claim 4, wherein said first and second image arrays are within a same reticule of the semiconductor process, whereby the image arrays can be placed onto said imaging chip without stitching circuitry between said image arrays.

6. The system of claim 1, wherein said support circuits further comprise:
a) regulators to regulate power to circuitry on said chip,
b) a clock to regulate the timing of circuitry on said chip.
c) an analog signal chain to couple analog pixel data from said first and second imaging arrays to said support circuits,
d) an analog to digital converter (ADC) to couple said analog pixel data to said computational unit.

7. the system of claim 6, wherein said supports circuits include a field programmable array (FPGA) to allow modification of instructions for the operations of the stereo imaging chip.

8. The system of claim 1, wherein said computational unit is a digital signal processor (DSP).

9. The system of claim 1, wherein said computational unit is formed from synthesized logic

10. The system of claim 1, further comprising a stereo focusing unit is positioned external to said chip to focus distant objects onto said first and second imaging arrays.

11. The system of claim 10, wherein said stereo focusing unit further comprises two lenses, whereby a first lens focuses said distant objects onto said first imaging array and a second lens focuses said distant objects onto said second imaging array.

12. The system of claim 10, wherein said two lenses are integrated together into a single optical substrate to form said stereo focusing unit.

13. The system of claim 10, wherein said computational unit analyzes a first image captured by the first imaging array and a second image captured by the second imaging array to calculate a distance to said distant objects.

14. The system of claim 13, wherein said computational unit determines a position of a first distant object relative to a second distant object of said distant objects.

15. The system of claim 13, wherein said computational unit outputs a stereo image of said distant objects.

16. The system of claim 15, wherein said stereo image is a digital stereo image.

17. The system of claim 15, wherein said computational unit controls said support circuitry to output a stereo video of said distant objects.

18. The system of claim 17, wherein said stereo video is in a digital format.

19. A method of stereo imagery, comprising:
a) forming a first image array on a semiconductor chip,
b) forming a second image array on said chip,
c) positioning said first and second image arrays at opposite edges of said chip,
d) forming support circuitry and a computational unit in areas on said chip not occupied by said first and second image arrays,
e) placing a stereo lens between said chip and a distant object,
f) capturing an image of said distant object with the first and second image arrays,
g) performing calculations on pixels of the first and second image array with a computational unit contained on said chip.

20. The method of claim 19, wherein said first and second image arrays are light sensitive arrays containing rows and columns of pixels.

21. The method of claim 19, wherein positioning said first and second image arrays at opposite edges of the chip provide a maximum separation of said image arrays on said chip.

22. The method of claim 19, wherein said support circuitry further comprise:
a) regulators to regulate power to circuitry on said chip,
b) a clock to regulate the timing of circuitry on said chip.
c) an analog signal chain to couple analog pixel data from said first and second imaging arrays to said support circuits,
d) an analog to digital converter (ADC) to couple said analog pixel data to said computational unit.

23. The method of claim 22, wherein said supports circuits include a field programmable array (FPGA) to allow modification of instructions for the operations of the stereo imaging chip.

24. The method of claim 19, wherein said computational unit is formed from synthesized logic.

25. The method of claim 19, wherein said computational unit is a digital signal processor (DSP).

26. The method of claim 19, wherein said stereo lens further comprises two lenses, whereby a first lens focuses said distant object onto said first image array and a second lens focuses said distant object onto said second image array.

27. The method of claim 26, wherein said two lenses are integrated together into a single optical substrate.

28. The system of claim 19, wherein said computational unit is used to analyze a first image captured by the first imaging array and a second image captured by the second imaging array to determine a distance to said distant objects.

29. The system of claim 19, wherein said computational unit determines a position of a first distant object relative to a second distant object of said distant objects.

30. The system of claim 19, wherein said computational unit outputs a stereo image of said distant objects.

31. The system of claim 30, wherein said stereo image is a digital stereo image.

32. The system of claim 19, wherein said computational unit controls said support circuitry to output a stereo video of said distant objects.

33. The system of claim 32, wherein said stereo video is in a digital format.
